# FASCICULE DE BREVET EUROPEEN

(11) **EP 2 148 815 B1**
(45) Date de publication et mention de la délivrance du brevet: **23.02.2011**
(21) Numéro de dépôt: 08787950.8
(22) Date de dépôt: 14.04.2008
(51) Int. Cl.: B64D 33/08

(54) **AGENCEMENT D'ENTRÉE D'AIR POUR VÉHICULE, NOTAMMENT UN AÉRONEF**
LUFTEINLASSANORDNUNG FÜR EIN FAHRZEUG, INSBESONDERE EIN FLUGZEUG
AIR INTAKE ARRANGEMENT FOR A VEHICLE, IN PARTICULAR AN AIRCRAFT

(30) Priorité: 24.04.2007 FR 0702956
(43) Date de publication de la demande: 03.02.2010
(73) Titulaire: AIRBUS OPERATIONS (SAS), 31060 Toulouse (FR)
(72) Inventeur: ALVAREZ, Franck, F-31300 Toulouse (FR); CHANCERELLE, Emeric, F-31100 Toulouse (FR); PORTE, Alain, F-31770 Colomiers (FR); PRAT, Damien, F-31770 Colomiers (FR)
(74) Mandataire: Bloch & Bonnétat
(86) Numéro de dépôt international: PCT/FR2008/000516
(87) Numéro de publication internationale: WO 2008/142289

(56) Documents cités:
- FR-A- 2 879 563
- FR-A- 2 879 564
- GB-A- 707 881
- US-A- 3 664 612
- US-A- 4 174 083
- US-A- 5 088 660
- US-A- 6 050 527

## Description

La présente invention concerne un agencement d'entrée d'air pour un véhicule, notamment un aéronef, comportant un canal de passage d'air avec un orifice de prise d'air.

On sait que de tels agencements d'entrée d'air sont largement utilisés dans le domaine aéronautique, particulièrement, mais non exclusivement, à des fins de renouvellement de l'air dans une zone confinée contenant des matériels thermiquement sensibles et/ou des milieux ambiants dangereux, du type inflammable ou détonant, pour lesquels il est nécessaire d'assurer une ventilation continue de la zone pour éviter tout risque de dysfonctionnement des matériels ou d'incident environnant.

Tel est notamment le cas des nombreux dispositifs mécaniques et/ou électriques prévus dans la zone confinée annulaire entre la nacelle et le carter externe de soufflante et des compresseurs d'un turboréacteur d'aéronef. Ces dispositifs, comme par exemple le fadec (full authority digital engine control), le boîtier relais d'accessoires (gearbox), le réservoir d'huile moteur, les composants fluidiques, etc..., généralement fixés tout autour du carter externe et situés ainsi dans la zone confinée, sont ventilés par de l'air extérieur entrant dans l'agencement par l'orifice de prise d'air pour traverser le canal ménagé dans la nacelle et se diffuser, en sortie du canal, dans la zone confinée. Les dispositifs, de même que les vapeurs d'huile ou autres émanant de cette zone, sont ventilés par l'air frais extérieur diffusé par le canal d'air, contribuant à assurer leur bon fonctionnement.

Pour répondre à la réglementation en vigueur qui impose un renouvellement d'air approprié par unité de temps de la zone confinée concernée, le canal de passage d'air de l'agencement a une section transversale prédéterminée permettant la circulation d'une quantité d'air suffisante dans le canal pour assurer, à sa sortie, le renouvellement d'air de la zone confinée contenant les dispositifs à ventiler.

Cependant, comme la quantité d'air extérieur entrant dans le canal d'air à section transversale prédéterminée est notamment fonction de paramètres liés à la vitesse de l'aéronef et à l'altitude de ce dernier, il est difficile de ventiler de façon optimale les dispositifs à refroidir et les vapeurs à chasser.

En effet, si l'air extérieur entrant en amont par l'orifice de prise d'air dans le canal à section transversale prédéterminée de l'agencement et sortant en aval de celui-ci est suffisant pour ventiler correctement les dispositifs lorsque l'aéronef est en phase de roulage au sol, en phase de décollage ou en phase d'attente, donc à faible vitesse, en revanche, lorsque l'aéronef est en phase de vol de croisière à une vitesse et une altitude maximales, le débit d'air sortant du canal de l'agencement en direction de la zone à ventiler est trop important. Des mesures ont permis de constater que, dans cette phase de vol, l'air circulant dans la zone confinée à travers le canal de l'agencement était renouvelé deux fois plus que nécessaire. Par ailleurs, l'air entrant dans la zone confinée engendre des traînées, ce qui se traduit par une perte de vitesse pour l'aéronef, et donc une augmentation de consommation dudit moteur en combustible.

Pour remédier à ces inconvénients, les documents WO-2006/067296 et WO-2006/067299 décrivent des agencements d'entrée d'air comportant des moyens d'obturation à élément mobile commandable, associés audit canal de passage d'air, et des moyens de commande dudit élément mobile actionnés, soit volontairement par le pilote dudit aéronef, soit, avantageusement, de façon automatique. Dans ce dernier cas, lesdits moyens de commande comportent un réservoir de volume variable -ensemble cylindre/piston, vessie, soufflet, etc ...- qui reçoit la pression totale exercée sur ledit aéronef par le fluide dans lequel ledit aéronef se déplace et qui est relié audit élément mobile commandable. Cependant, la pression n'étant pas stable localement, ce système ne peut être optimal. De plus, ces moyens de commande sont lourds par rapport à leur environnement et ils ont tendance à engendrer des phénomènes de vibrations ou de balourd nécessitant un renfort de l'ensemble, ce qui alourdit considérablement ledit agencement d'entrée d'air. Or, afin de limiter la consommation en carburant des aéronefs, les concepteurs ont pour objectif de créer des systèmes plus légers.

La présente invention a pour objet de remédier à ces inconvénients et elle concerne un agencement d'entrée d'air dont la conception permet d'assurer une ventilation optimale d'une zone confinée telle que celle décrite ci-dessus à propos d'un turboréacteur, mais qui peut être également une zone feux ou une zone ventrale de l'avion (belly fairing) ou, d'une façon générale, toute zone plus ou moins close et thermiquement sensible d'un véhicule pour laquelle un renouvellement d'air est souhaité.

A cette fin, selon l'invention, l'agencement d'entrée d'air pour un véhicule, notamment un aéronef, comportant au moins un canal de passage d'air avec un orifice de prise d'air et prélevant un flux d'air extérieur entrant dans ledit canal en amont, à travers ledit orifice de prise d'air, ledit agencement comportant des moyens d'obturation à élément mobile commandable, associés audit canal, et des moyens de commande dudit élément mobile commandable permettant de faire varier la section transversale dudit canal en fonction de la vitesse dudit véhicule entre une section transversale minimale autorisant un débit d'air minimal en direction de ladite zone à ventiler et une section transversale maximale autorisant un débit d'air maximal en direction de ladite zone, est remarquable en ce que lesdits moyens de commande sont formés par une surface aérodynamique disposée dans ledit canal de passage d'air et apte à engendrer une force de portance sous l'action dudit flux d'air extérieur traversant ledit canal de passage d'air.

Ainsi, puisque la portance est proportionnelle à la vitesse dudit flux d'air extérieur traversant ledit canal (et donc à la vitesse dudit véhicule), grâce à l'invention on obtient des moyens d'obturation automatiques en fonction de la vitesse du véhicule, aptes à faire varier la section transversale dudit canal par lesdits moyens d'obturation et à modifier, selon les phases de vol d'un aéronef, le débit d'air entrant dans la zone confinée et, donc, à ventiler au mieux les dispositifs concernés.

Par exemple, en vol de croisière d'un aéronef (vitesse et altitude maximales), la section transversale dudit canal est avantageusement et automatiquement réduite pour ventiler raisonnablement les dispositifs et limiter ainsi la traînée engendrée sur l'ensemble de la nacelle par l'air absorbé dans la zone confinée. En revanche, lors du roulage au sol de l'aéronef ou en phase de décollage (faible vitesse), la section transversale du canal est automatiquement ouverte au maximum par l'effacement de l'élément mobile desdits moyens d'obturation, pour faire circuler ainsi une quantité d'air maximale dans le canal et ventiler convenablement les dispositifs situés dans la zone confinée.

Ainsi, de plus, grâce à l'invention, la quantité d'air prélevé par l'agencement d'entrée d'air est adaptée à chaque phase de vol, ce qui minimise la pénalité des performances de l'aéronef due à la ventilation.

De préférence, ladite surface aérodynamique est formée par un profilé disposé transversalement audit canal. Un tel profilé aérodynamique peut comporter un bord d'attaque dirigé vers ledit orifice de prise d'air et un bord de fuite dirigé vers ladite zone confinée.

Bien entendu, à l'intérieur dudit canal de passage d'air, ladite surface aérodynamique est disposée à un endroit où ses performances sont les meilleures. Ainsi, en fonction de différents paramètres, incluant les formes et les dimensions dudit orifice de prise d'air et dudit canal de passage d'air, ladite surface aérodynamique peut être disposée au voisinage dudit orifice de prise d'air ou bien plus ou moins profondément à l'intérieur dudit canal de passage d'air.

Par ailleurs, pour pouvoir ajuster les performances de ladite surface aérodynamique aux circonstances, il est avantageux que la courbure du profil de celle-ci soit automatiquement réglable pour renforcer l'action desdits moyens de commande. Par exemple, le bord de fuite de ladite surface aérodynamique peut être constitué de deux matériaux à coefficients de dilatation thermique différents, de façon à former une sorte de bilame. Il est ainsi possible, dans le cas d'un aéronef, d'accentuer la courbure du profil de ladite surface aérodynamique et donc d'augmenter la portance de celle-ci, lorsque la température du flux d'air baisse, c'est-à-dire lorsque ledit aéronef prend de l'altitude. La courbure et la portance maximales peuvent alors être obtenues en vol de croisière de l'aéronef.

Par ailleurs, ledit élément mobile commandable peut être formé par une lame élastique s'appliquant spontanément contre une paroi dudit canal de passage d'air, ladite lame élastique étant fixée par une de ses extrémités audit canal, alors que ladite surface aérodynamique est fixée à l'autre extrémité de ladite lame élastique.

Ainsi, quand ladite lame élastique est élastiquement écartée de la paroi dudit canal contre laquelle elle s'applique par l'action de la portance engendrée par ladite surface aérodynamique, la section transversale du canal est réduite, autorisant un débit d'air de ventilation réduit en direction de la zone annulaire confinée, alors que quand elle est appliquée contre la paroi du canal, la section transversale du canal est alors maximale, autorisant un débit d'air de ventilation maximal en direction de ladite zone.

Bien entendu, une telle réduction de la section transversale dudit canal est fonction de la vitesse du véhicule et elle peut être telle que ladite section devienne minimale, autorisant un débit d'air de ventilation minimal. De préférence, on prévoit une butée permettant de marquer la position de ladite lame élastique correspondant à cette section transversale minimale.

De préférence, l'extrémité de ladite lame élastique fixée audit canal est disposée au voisinage dudit orifice de prise d'air.

Ledit canal de passage d'air peut avantageusement présenter une section transversale rectangulaire et la largeur de ladite lame élastique correspond alors à celle de ladite section transversale rectangulaire.
Les figures du dessin annexé feront bien comprendre comment l'invention peut être réalisée. Sur ces figures, des références identiques désignent des éléments semblables.
La figure 1 représente schématiquement et partiellement en coupe la nacelle d'un turboréacteur munie d'un agencement d'entrée d'air symbolisé en A, conforme à l'invention.
La figure 2 est une vue de face, en coupe selon la ligne II-II de la figure 1, de ladite nacelle du turboréacteur, montrant différents dispositifs à ventiler.
La figure 3 montre, en coupe longitudinale agrandie, un exemple de réalisation des moyens d'obturation conformes à la présente invention.
La figure 4 est une vue selon la flèche IV de la figure 3.
La figure 5 montre, en vue semblable à la figure 3, une localisation différente de la surface aérodynamique de l'agencement d'entrée d'air conforme à la présente invention.
Les figures 6A et 6B illustrent la variation de courbure du profil de la surface aérodynamique en fonction de la température.
La figure 7 montre, en coupe longitudinale agrandie, une variante de réalisation des moyens d'obturation conformes à la présente invention.

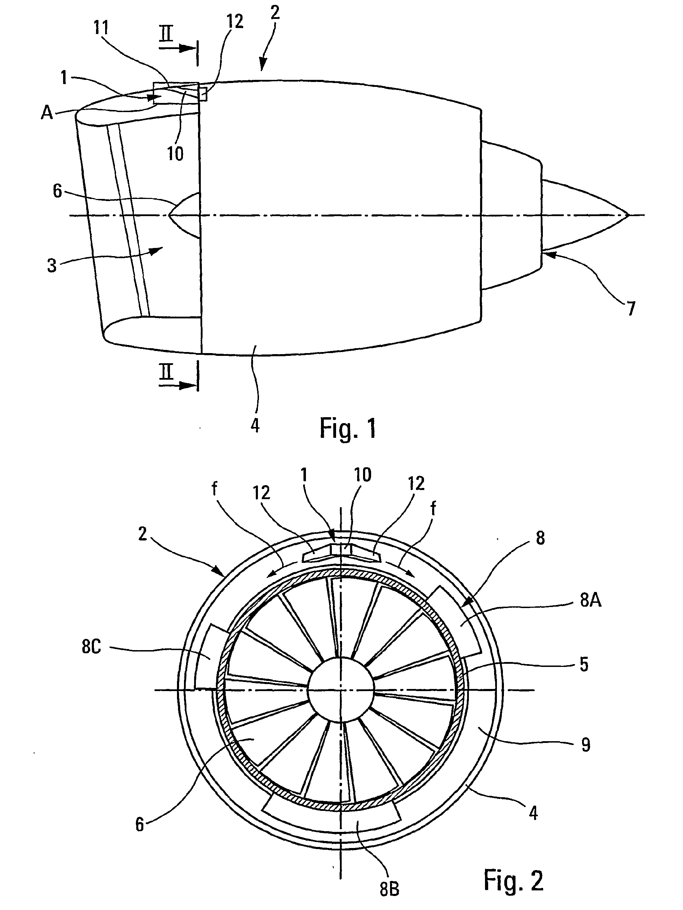

L'agencement d'entrée d'air 1, conforme à l'invention et symbolisé par un rectangle A sur la figure 1, est prévu dans une nacelle 2 d'un moteur monté sur un avion (non représenté). Comme le montrent schématiquement les figures 1 et 2, la nacelle 2 comprend, de façon usuelle, une partie avant d'entrée d'air 3 pour l'alimentation en air du moteur, une partie intermédiaire 4 entourant le carter externe 5 de la soufflante 6, les compresseurs du moteur, et la chambre de combustion et la turbine, d'où émerge le carter externe de la tuyère 7 et son cône.

Différents dispositifs ou équipements mécaniques et/ou électriques 8 sont rapportés sur le carter externe 5 de la soufflante et des compresseurs, c'est-à-dire dans la zone annulaire confinée 9 entre la nacelle 2 et le carter externe 5 du moteur. On a représenté symboliquement, sur la figure 2, certains des dispositifs 8 se trouvant dans cette zone 9, à savoir le fadec 8A, le boîtier relais d'accessoires 8B et le réservoir d'huile moteur 8C.

Le renouvellement de l'air dans cette zone confinée 9 pour maintenir les dispositifs 8 dans une plage de température appropriée et permettre leur bon fonctionnement, est assuré par l'agencement d'entrée d'air 1 qui est situé en haut de la partie avant de la nacelle 2 et comporte, à cet effet, un canal de passage d'air 10 ménagé dans la paroi structurelle de la partie avant de la nacelle 2 et mettant en communication l'air extérieur avec la zone confinée 9. Pour cela, le canal 10 présente, en amont, un orifice de prise d'air 11 et, en aval, un diffuseur 12 en relation avec ladite zone 9, débouchant dans la partie centrale 4 de la nacelle.

Le canal de passage d'air 10 est légèrement incliné par rapport à la surface extérieure de la partie avant de la nacelle 2 et se dirige en aval vers l'axe longitudinal du moteur, pour prélever et amener au mieux l'air extérieur frais dans le canal 10 et l'évacuer ensuite tangentiellement par le diffuseur 12 à double sortie, comme le montrent les flèches f sur la figure 2, des deux côtés de la zone confinée annulaire 9.

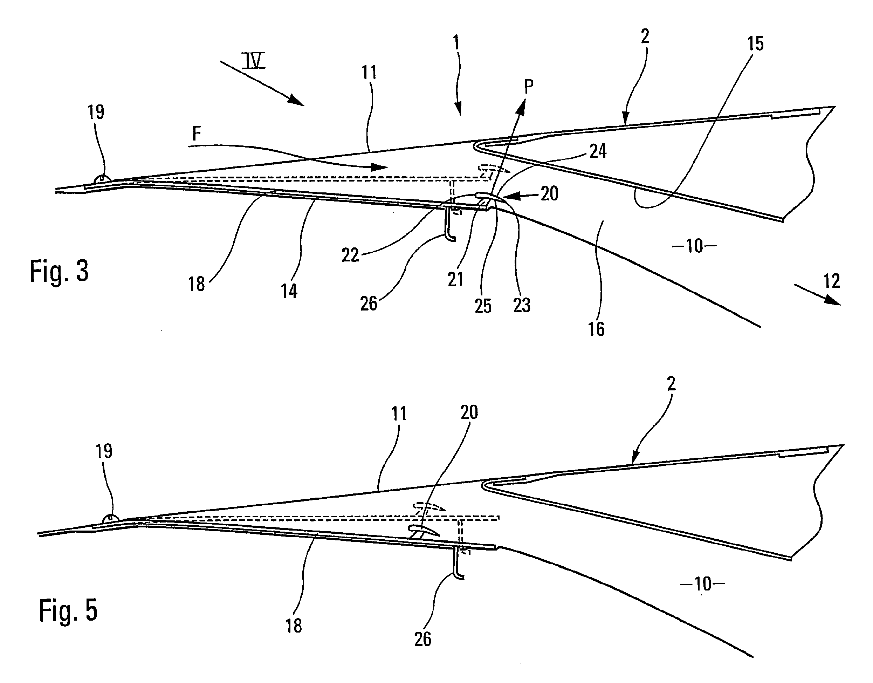

Dans les exemples représentés sur les figures 3, 5 et 7, le profil général du canal 10 de l'agencement 1 est légèrement évolutif, c'est-à-dire qu'après avoir convergé en aval de son orifice de prise d'air tangentiel 11, il diverge quelque peu en direction du diffuseur 12 et sa section transversale est rectangulaire. Le canal 10 est délimité par une paroi inférieure 14, une paroi supérieure 15 et deux parois latérales 16 et 17.

Conformément à la présente invention, la section transversale du canal 10 est rendue réglable grâce à des moyens d'obturation commandés aérodynamiquement et aptes à réguler le débit d'air de ventilation circulant dans le canal 10, en direction de la zone confinée 9, en fonction de la vitesse de l'avion.

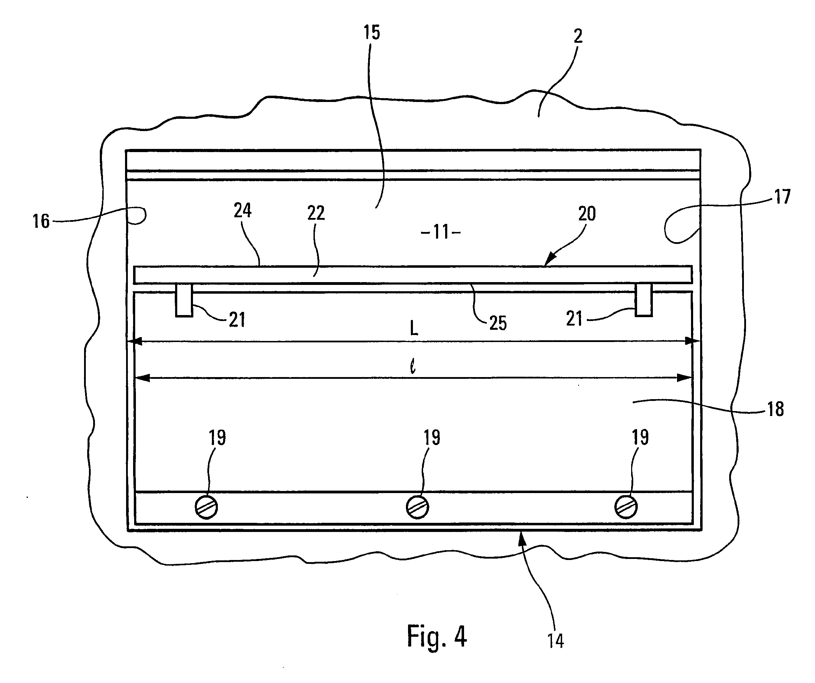

Dans le mode de réalisation illustré par les figures 3 et 4, lesdits moyens d'obturation comportent une lame élastique 18, de forme rectangulaire, dont une extrémité est fixée au voisinage de l'orifice de prise d'air 11, par exemple au moyen de vis 19, et dont la largeur ℓ est légèrement inférieure à la largeur L du canal 10. La lame élastique 18 est logée dans ledit canal 10 et s'applique spontanément contre la paroi inférieure 14 de celui-ci.

A son extrémité intérieure, opposée aux vis 19, la lame élastique 18 porte un profilé aérodynamique 20, par l'intermédiaire de supports 21 dégageant ledit profilé de ladite lame élastique 18.

Ledit profilé aérodynamique 20 est intérieur audit canal 10 et transversal par rapport à celui-ci. Il comporte un bord d'attaque 22 dirigé vers l'orifice de prise d'air 11, un bord de fuite 23 dirigé vers le diffuseur 12, un extrados 24 en regard de la paroi supérieure 15 et un intrados 25 en regard de la paroi inférieure 14.

Ainsi, lorsque l'avion portant la nacelle 2 se déplace, un flux d'air (symbolisé par la flèche F) pénètre dans le canal 10 à travers l'orifice de prise d'air 11. Il en résulte que ce flux d'air F engendre une force de portance P appliquée sur ledit profilé aérodynamique 20 et que cette force de portance P tend, à l'encontre de l'élasticité propre de la lame élastique 18, à écarter celle-ci de la paroi inférieure 14 et à la rapprocher de la paroi supérieure 15.

La lame élastique 18 fait donc office d'obturateur.

De façon évidente, la déformation de la lame élastique 18 dans le sens de l'obturation est d'autant plus grande que la force de portance P est plus grande, c'est-à-dire que la vitesse de l'avion est plus grande.

L'obturation maximale du canal 10 par la lame élastique 18 est fixée par une butée 26, par exemple constituée par un crochet traversant la paroi inférieure 14 et apte à coopérer avec la face de celle-ci opposée au canal 10.

Ainsi, la section de passage du flux d'air F dans le canal 10 peut varier, en fonction de la vitesse de l'avion, entre une valeur maximale, pour laquelle la lame élastique 18 est appliquée contre la paroi inférieure 14, et une valeur minimale, déterminée par la butée 26.

Le mode de réalisation de la figure 5 est semblable en tous points à celui des figures 3 et 4, sauf en ce qui concerne la localisation du profilé aérodynamique 20. En effet, dans ce cas, ledit profilé aérodynamique, tout en se trouvant dans ledit canal 10, est disposé en regard de l'orifice de prise d'air 11 et non plus relativement profondément dans le canal 10, comme montré sur la figure 3. Les figures 3 et 5 illustrent que la position du profilé aérodynamique 20 dans le canal 10 peut être optimisée en fonction des caractéristiques du flux d'air F, et donc en fonction de l'orifice de prise d'air 11 et du canal 10.

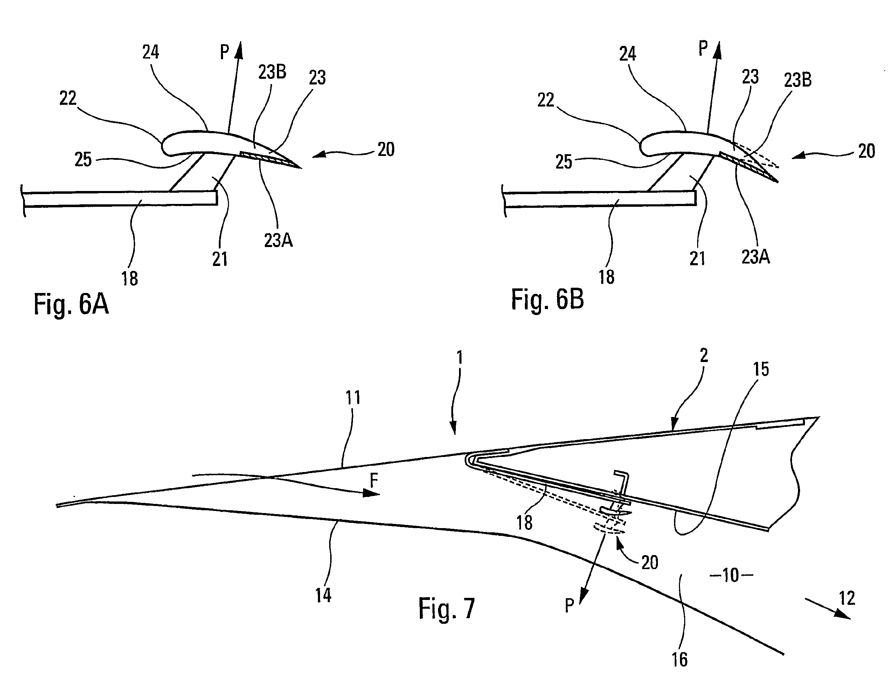

Sur les figures 6A et 6B, on a représenté un profilé aérodynamique 20 dont le bord de fuite 23 est constitué de deux lames accolées 23A et 23B présentant des coefficients de dilatation thermique différents. Ainsi, comme illustré sur la figure 6B, la courbure du profilé 20 peut augmenter lorsque la température du flux d'air extérieur F baisse, cette courbure pouvant alors être maximale lorsque l'aéronef est en vol de croisière.

Sur la figure 7, on a représenté une variante de réalisation dans laquelle la lame élastique 18 est fixée à la paroi supérieure 15 et l'extrados du profilé 20 est dirigé vers la paroi inférieure 14. Dans ce mode de réalisation, l'obturation du canal 10 se fait du haut vers le bas, alors que dans l'exemple des figures 3 et 5, elle se fait du bas vers le haut.

## Revendications

1. Agencement d'entrée d'air (1) pour un véhicule, notamment un aéronef, comportant au moins un canal de passage d'air (10) avec un orifice de prise d'air (11) et prélevant un flux d'air extérieur (F) entrant dans ledit canal en amont, à travers ledit orifice de prise d'air (11), ledit agencement comportant des moyens d'obturation à élément mobile commandable, associés audit canal (10), et des moyens de commande dudit élément mobile commandable permettant de faire varier la section transversale dudit canal (10) en fonction de la vitesse dudit véhicule entre une section transversale minimale autorisant un débit d'air minimal en direction de ladite zone (9) à ventiler et une section transversale maximale autorisant un débit d'air maximal en direction de ladite zone (9),
**caractérisé en ce que** lesdits moyens de commande sont formés par une surface aérodynamique disposée dans ledit canal de passage d'air (10) et apte à engendrer une force de portance (P) sous l'action dudit flux d'air extérieur (F) traversant ledit canal de passage d'air (10).

2. Agencement selon la revendication 1,
**caractérisé en ce que** ladite surface aérodynamique est formée par un profilé (20) disposé transversalement audit canal de passage d'air (10).

3. Agencement selon la revendication 2,
**caractérisé en ce que** ledit profilé (20) comporte un bord d'attaque (22) dirigé vers ledit orifice de prise d'air (11) et un bord de fuite (23) dirigé vers ladite zone confinée (9).

4. Agencement selon l'une des revendications 1 à 3,
**caractérisé en ce que** la courbure du profil de ladite surface aérodynamique est automatiquement réglable pour renforcer l'action desdits moyens de commande.

5. Agencement selon la revendication 4,
**caractérisé en ce que** ladite courbure est réglable en fonction de la température, de façon que ladite courbure augmente lorsque la température dudit flux d'air extérieur (F) baisse.

6. Agencement selon l'une des revendications 1 à 5,
**caractérisé en ce que** ledit élément mobile commandable est formé par une lame élastique (18) s'appliquant spontanément contre une paroi (14, 15) dudit canal de passage d'air (10), **en ce que** ladite lame élastique (18) est fixée par une de ses extrémités audit canal (10) et **en ce que** ladite surface aérodynamique est fixée à l'autre extrémité de ladite lame élastique (18).

7. Agencement selon la revendication 6,
**caractérisé en ce que** l'extrémité de ladite lame élastique (18) fixée audit canal de passage d'air (10) est disposée au voisinage dudit orifice de prise d'air (11).

8. Agencement selon l'une des revendications 6 ou 7,
**caractérisé en ce que** ledit canal de passage d'air (10) présente une section rectangulaire et **en ce que** la largeur (ℓ) de ladite lame élastique (18) correspond à celle (L) de ladite section dudit canal (10).

9. Agencement selon l'une des revendications 1 à 8,
**caractérisé en ce qu'**il comporte une butée (26) permettant de marquer la position de ladite lame élastique (18) correspondant à ladite section transversale minimale dudit canal de passage d'air (10).

## Claims

1. An air intake arrangement (1) for a vehicle, particularly for an aircraft, comprising at least one air passage channel (10) with an air intake orifice (11) and which bleeds off a flow (F) of external air that enters said channel at the upstream end, through said air intake orifice (11), said arrangement comprising shut-off means with a controllable mobile element, which are associated with said channel (10), and control means for controlling said controllable mobile element so as to vary the cross section of said channel (10) according to the speed of said vehicle between a minimal cross section that allows a minimal air flow rate toward said zone (9) that is to be ventilated and a maximum cross section that allows a maximum air flow rate toward said zone (9),
**characterized in that** said control means are formed of an aerodynamic surface placed in said air passage channel (10) and capable of generating a lift force (P) under the action of said flow (F) of external air passing through said air passage channel (10).

2. The arrangement as claimed in claim 1,
**characterized in that** said aerodynamic surface is formed by a profile piece (20) positioned transversely to said air passage channel (10).

3. The arrangement as claimed in claim 2,
**characterized in that** said profile piece (20) comprises a leading edge (22) directed toward said air intake orifice (11) and a trailing edge (23) directed toward said confined zone (9).

4. The arrangement as claimed in one of claims 1 to 3,
**characterized in that** the curvature of the profile of said aerodynamic surface is automatically adjustable so as to enhance the action of said control means.

5. The arrangement as claimed in claim 4,
**characterized in that** said curvature can be adjusted according to the temperature, so that said curvature increases as the temperature of said flow (F) of external air drops.

6. The arrangement as claimed in one of claims 1 to 5,
**characterized in that** said controllable mobile element is formed of an elastic blade (18) pressing spontaneously against a wall (14, 15) of said air passage channel (10), **in that** said elastic blade (18) is fixed via one of its ends to said channel (10) and **in that** said aerodynamic surface is fixed to the other end of said elastic blade (18).

7. The arrangement as claimed in claim 6,
**characterized in that** the end of said elastic blade (18) fixed to said air passage channel (10) is located near said air intake orifice (11).

8. The arrangement as claimed in either of claims 6 and 7,
**characterized in that** said air passage channel (10) has a rectangular cross section, and **in that** the width (ℓ) of said elastic blade (18) corresponds to the width (L) of said section of said channel (10).

9. The arrangement as claimed in one of claims 1 to 8,
**characterized in that** it comprises a stop (26) for marking the position of said elastic blade (18) that corresponds to said minimum cross section of said air passage channel (10).

## Patentansprüche

1. Lufteintrittsanordnung (1) für ein Fahrzeug, insbesondere ein Luftfahrzeug, umfassend mindestens einen Luftdurchflusskanal (10) mit einer Luftansaugöffnung (11), der einen Außenluftstrom (F) entnimmt, der vorgelagert durch die Luftansaugöffnung (11) in den Kanal eintritt, wobei die Anordnung Verschlussmittel mit steuerbarem, beweglichem Element umfasst, die mit dem Kanal (10) verbunden sind, und wobei mit Steuerungsmitteln für das steuerbare, bewegliche Element der Querschnitt des Kanals (10) je nach Geschwindigkeit des Fahrzeugs zwischen einem minimalen Querschnitt, der einen minimalen Luftdurchfluss in Richtung der zu belüftenden Zone (9) zulässt, und einem maximalen Querschnitt, der einen maximalen Luftdurchfluss in Richtung der Zone (9) zulässt, variiert werden kann, **dadurch gekennzeichnet, dass** die Steuerungsmittel von einer aerodynamischen Fläche gebildet werden, die im Luftdurchflusskanal (10) angeordnet und imstande ist, unter der Einwirkung des Außenluftstroms (F), der den Luftdurchflusskanal (10) durchfließt, eine Tragkraft (P) zu erzeugen.

2. Anordnung nach Anspruch 1, **dadurch gekennzeichnet, dass** die aerodynamische Fläche von einem Profil (20) gebildet wird, das quer zum Luftdurchflusskanal (10) angeordnet ist.

3. Anordnung nach Anspruch 2, **dadurch gekennzeichnet, dass** das Profil (20) eine Stirnkante (22), die zur Luftansaugöffnung (11) hin gerichtet ist, und eine Hinterkante (23), die zur begrenzten Zone (9) hin gerichtet ist, umfasst.

4. Anordnung nach einem der Ansprüche 1 bis 3, **dadurch gekennzeichnet, dass** die Krümmung des Profils der aerodynamischen Fläche automatisch verstellbar ist, um die Wirkung der Steuerungsmittel zu verstärken.

5. Anordnung nach Anspruch 4, **dadurch gekennzeichnet, dass** die Krümmung je nach Temperatur verstellbar ist, sodass die Krümmung zunimmt, sobald die Temperatur des Außenluftstroms (F) abnimmt.

6. Anordnung nach einem der Ansprüche 1 bis 5, **dadurch gekennzeichnet, dass** das steuerbare, bewegliche Element von einer elastischen Lamelle (18) gebildet wird, die sich spontan gegen eine Wand (14, 15) des Luftdurchflusskanals (10) legt, **dadurch**, dass die elastische Lamelle (18) an einem ihrer Enden am Kanal (10) befestigt ist, und **dadurch**, dass die aerodynamische Fläche am anderen Ende der elastischen Lamelle (18) befestigt ist.

7. Anordnung nach Anspruch 6, **dadurch gekennzeichnet, dass** das Ende der elastischen Lamelle (18), das am Luftdurchflusskanal (10) befestigt ist, in der Nähe der Luftansaugöffnung (11) angeordnet ist.

8. Anordnung nach einem der Ansprüche 6 oder 7, **dadurch gekennzeichnet, dass** der Luftdurchflusskanal (10) einen rechteckigen Querschnitt aufweist, und **dadurch**, dass die Breite (f) der elastischen Lamelle (18) jener (L) des Querschnitts des Kanals (10) entspricht.

9. Anordnung nach einem der Ansprüche 1 bis 8, **dadurch gekennzeichnet, dass** sie einen Anschlag (26) umfasst, mit dem die Position der elastischen Lamelle (18), die dem minimalen Querschnitt des Luftdurchflusskanals (10) entspricht, markiert werden kann.
